# EUROPEAN PATENT APPLICATION

(11) **EP 2 582 020 A2**
(43) Date of publication of application: **17.04.2013**
(21) Application number: 12180489.2
(22) Date of filing: 14.08.2012
(51) Int. Cl.: H02K 5/15, H02K 15/14

(54) **Stator core retention cylinder for electric machinery**

(30) Priority: 14.10.2011 US 201113273579
(71) Applicant: Hamilton Sundstrand Corporation, Windsor Locks, CT 06096-1010 (US)
(72) Inventor: Franzen, Mark F., Brodhead, WI 53520 (US); Picard, Johannes W., Rockford, IL 61114 (US); Campbell, Kris H., Poplar Grove, IL 61065 (US)
(74) Representative: Tomlinson, Kerry John

(57) **Abstract**

An electric machine system includes a rotor core (110), a stator core (120) disposed about the rotor core, an electric machine housing (135) coupled to the stator core, a holding cylinder (170) disposed between the electric machine housing and the stator core, a first flange (140) coupled to the electric machine housing (135) at a first end of the holding cylinder (170) and a second flange (145) coupled to the electric machine housing (135) at an opposite end of the holding cylinder (170).

## Description

### BACKGROUND OF THE INVENTION

The present invention relates to electric machinery, and more specifically, to a stator core retention cylinder for electric machinery.

Electromagnetic torque developed in an electric machine is reacted by the housing in which the stator electromagnetic core is mounted. Torque reaction by the housing is typically accomplished using radial interference fit between housing and core. The interference fit between the housing and the core changes with operating temperature if the housing and core have dissimilar thermal expansion rates. In turn, both housing-to-core torque carrying ability and compressive stress induced within the core change with interference fit. Problematically, alloys used in the core exhibit degraded electromagnetic performance under excessive compressive stress when creating the interference fit. Currently, excessive compressive stress is mitigated but not eliminated by fitting the core in a thin-wall holding cylinder, typically steel, which in turn is fit in the housing.

### BRIEF DESCRIPTION OF THE INVENTION

The invention provides include an electric machine system including a rotor core, a stator core disposed about the rotor core, an electric machine housing coupled to the stator core, a holding cylinder disposed between the electric machine housing and the stator core, a first flange coupled to the electric machine housing at a first end of the holding cylinder and a second flange coupled to the electric machine housing and radially coupled to the holding cylinder.

The invention also provides a stator core retention apparatus including a first flange integrally coupled to a holding cylinder and configured to be axially coupled to an electric machine housing and a second flange configured to be axially coupled to the electric machine housing and to the holding cylinder.

The invention also provides a method for assembling an electric machine, including axially positioning a stator core in a holding cylinder having a lip and a first flange, positioning the stator core in contact with the lip and secured by a retention device, coupling a second flange to an electric machine housing, coupling the holding cylinder to the electric machine housing and fastening the first flange to the housing to react electromagnetic torque and maintain axial position.

### BRIEF DESCRIPTION OF THE DRAWINGS

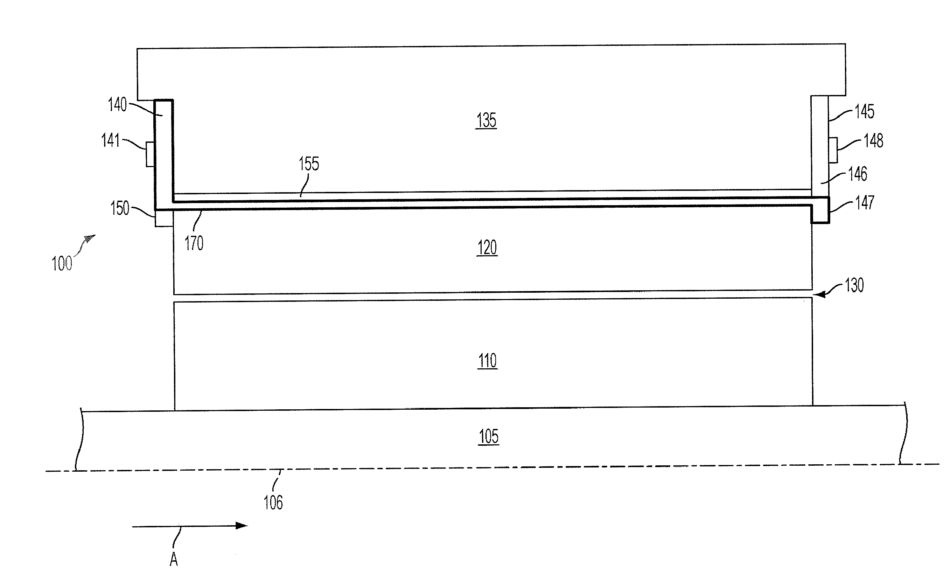

The subject matter which is regarded as the invention is particularly pointed out and distinctly claimed in the claims at the conclusion of the specification. The foregoing and other features, and advantages of the invention are apparent from the following detailed description taken in conjunction with the accompanying drawing in which:

The figure illustrates a cross-sectional view of a stator core retention system for electric machinery.

### DETAILED DESCRIPTION OF THE EMBODIMENT

The figure illustrates a cross-sectional view of a stator core retention system 100 for electric machinery. It can be appreciated that the system 100 can represent any electric generator and motor. The system 100 includes a rotor shaft 105 having a centerline 106. A rotor core 110 is disposed on the rotor shaft 105. The system 100 further includes a stator core 120. A gap 130 separates the rotor core 110 and the stator core 120. The system 100 further includes an electric machine housing 135. As described herein, electromagnetic torque developed in an electric machine is reacted by the housing 135 in which the stator core 120 is mounted. The system 100 further includes a holding cylinder 170. As described herein, excessive compressive stress is mitigated by fitting holding cylinder 170 about the stator core 120. In one embodiment, the electric machine housing 135 is aluminum or magnesium and the stator core 120 is a ferrous material such as steel. As such, the material of the electric machine housing 135 and the stator core 120 have different thermal expansion properties. Currently, this difference in thermal expansion properties can cause issues when the housing of an electric machine and the corresponding rotor core operate over a wide temperature range. In one embodiment, the system 100 provides the housing-to-core torque carrying ability with accompanying core material compressive stress that is relatively uniform over temperature without the requirement that electric machine housing 135 and the stator core 120 have close thermal expansion rates.

In one embodiment, the system 100 includes a first flange 140 that is integral with the holding cylinder 170. The system 100 further includes a second flange 145 that is removable from the holding cylinder 170. The holding cylinder 170 includes a lip 147 that retains the stator core 120 axially when the stator core 120 is positioned with respect to the rotor core 110 and the electric machine housing 135. In addition, once the stator core 120 is positioned, a retention device 150 (e.g., a retention nut) is coupled to the first flange 140 radially to further secure the rotor core 120 between the retention device 150 and lip 147 and with respect to the electric machine housing 135 and the rotor core 110. It can also be appreciated that the first and second flanges 140, 145 center and maintain the holding cylinder 170 with respect to the centerline 106 of the electric machine housing 135. In addition, the first and second flanges 140, 145 can be sized such that instead of having an interference fit between the electric machine housing 135 and the stator core 120, a clearance 155 is thus created between the electric machine housing 135 and the stator core 120. The clearance 155 is disposed along the axial length of the holding cylinder 170, there is positive clearance between the electric machine housing 135 and holding cylinder 170 at all temperatures. Temperature-induced differences in radial deflection between the electric machine housing 135 and holding cylinder 170 thus have no effect on interference-induced stress between holding cylinder 170 and stator core 120. In this way, concerns about differences between thermal properties of the electric machine housing 135 and the stator core 120 are essentially eliminated. The necessary electromagnetic torque from the electric machine housing 135 and the stator core 120 is accomplished via the first flange 140 and the integral holding cylinder 170. Furthermore, the clearance 155 can be used for stator cooling purposes by flowing cooling oil (or other cooling fluids) through the clearance 155.

In one embodiment, interference fits are created between the first flange 140 and the housing 135, and the second flange 145 and the housing 135. A mechanical fastener 141 constrains the first flange 140 to the electric machine housing 135 in such manner to counteract electromagnetic torque and to prevent axial movement of the stator core 120. A fastener 148 couples the second flange to the housing 135. The first and second flanges 140, 145 maintain the electric machine the housing 135 in radial contact with respect to the stator core 120 over the entire operating temperature range to secure alignment of the stator core 120 in the electric machine housing 135.

In assembling the system 100, the stator core 120 is inserted into the holding cylinder 170 axially along the centerline 106 in the direction shown by arrow A. The lip 147 prevents further axial movement of the stator core 120, once the stator core 120 engages the lip 147. The second flange 145 is then coupled to the electric machine housing 135 by heating housing 135 sufficiently to create radial clearance between second flange 145 and housing 135. The subassembly of stator core 120 and holding cylinder 170 is slid into gap 155 and engaged at second end with second flange 145. The first flange 140 is coupled to the electric machine housing 135 by heating housing 135 sufficiently to create radial clearance between the first flange 140 and housing 135. Subsequent cooling of the housing positions the flange radially, which, in turn, positions the holding cylinder 170. At this point the first and second flanges 140, 145 are in frictional engagement with the electric machine housing 135. The retention device 150 is then coupled to the first flange 140, which then prevents axial movement of the stator core 120 in a direction opposite to that of arrow A.

The system 100 therefore provides several technical effects including, but not limited to: 1) a radial fit is maintained between outer diameters of the first and second flanges 140, 145 and the electric machine housing 135, which maintains radial alignment; 2) mechanical fastening of the first flange 140 to the electric machine housing 135 provides axial alignment and reacts torque between the electric machine housing 135 and holding cylinder 170; and 3) a radial fit between the holding cylinder 170 and the stator core 120 reacts torque between the holding cylinder 170 and the stator core 120. As such, torque between the holding cylinder 170 and the stator core 120 is no longer reacted by radial interference between the electric machine housing 135 and the holding cylinder 170.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention, which is defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A stator core retention apparatus (100), comprising:
a holding cylinder (170);
a first flange (140) coupled to the holding cylinder (170) and configured to be axially coupled to an electric machine housing (135); and
a second flange (145) configured to be axially coupled to the electric machine housing (135) and to receive a portion of the holding cylinder (170).

2. The apparatus as claimed in Claim 1 wherein the first flange (140) is integrally coupled to the holding cylinder (170).

3. The apparatus as claimed in Claim 1 or 2 wherein the first flange (140) and the second flange (145) are configured to maintain between the flanges a clearance (155) radially disposed between the electric machine housing (135) and the holding cylinder (170).

4. The apparatus as claimed in Claim 1, 2 or 3 wherein the second flange (145) is removable from the holding cylinder (170).

5. The apparatus as claimed in Claim 1, 2, 3 or 4 further comprising a retention device (150) configured to axially couple to the first flange (140).

6. The apparatus as claimed in any of Claims 1 to 5 further comprising mechanical fasteners (141,148) configured to axially maintain the first (140) and second (145) flanges with respect to the electric machine housing (135).

7. An electric machine system, comprising:
a stator core retention apparatus as claimed in any preceding claim;
a rotor core (110);
a stator core (120) disposed about the rotor core (110);
an electric machine housing (135) coupled to the stator core (120);
the holding cylinder (170) disposed between the electric machine housing (135) and the stator core (120);
the first flange (140) coupled to the electric machine housing (135) at a first end of the holding cylinder (170); and
the second flange (145) coupled to the electric machine housing (135) and radially coupled to the holding cylinder (170).

8. The system as claimed in Claim 7 further comprising a retention device (150) axially coupled to the first flange (140) and in operative contact with the stator core (120).

9. The system as claimed in Claim 8 wherein the retention device (150) maintains the stator core continuously between the first (140) and second (145) flanges.

10. The system as claimed in Claim 9 wherein the retention device (150) is configured to maintain the stator core between a lip (147) of the holding cylinder (170) and the retention device (150).

11. A method of assembling an electric machine, comprising:
axially positioning a stator core (120) in a holding cylinder (170) having a lip (147) and a first flange (140);
positioning the stator core (120) in contact with the lip (147)and secured by a retention device (150);
coupling a second flange (145) to an electric machine housing (135);
coupling the holding cylinder (170) to the electric machine housing (135); and
fastening the first flange (140) to the electric machine housing (135) to react electromagnetic torque and maintain axial position.

12. The method as claimed in Claim 11 wherein the stator core (120) is axially maintained between the lip (147) and the retention device (150).

13. The method as claimed in Claim 11 or 12 wherein a clearance (155) is radially maintained between the holding cylinder (170) and the electric machine housing (135).

14. The method as claimed in Claim 11, 12 or 13 wherein the first flange (140) and the second flange (145) are coupled to the electric machine housing (135) by mechanical fasteners (141,148)
